# EUROPEAN PATENT SPECIFICATION

(11) **EP 1 166 999 B1**
(45) Date of publication and mention of the grant of the patent: **25.02.2004**
(21) Application number: 01114293.2
(22) Date of filing: 13.06.2001
(51) Int. Cl.: B29C 65/66, B29C 69/00, B29C 65/78, B29C 45/00

(54) **Process for the automatic and centered assembly of molded parts to be coupled**
Verfahren zum automatischen zentrierten Zusammenfügen von geformten Teilen
Procédé pour l'assembage automatique et centré de pieces moulées

(30) Priority: 21.06.2000 IT RE20000023 U
(43) Date of publication of application: 02.01.2002
(73) Proprietor: Ask Industries S.p.A., I-42100 Reggio Emilia (IT)
(72) Inventor: Nili, Tiziano, 42100 Reggio Emilia (IT)
(74) Representative: Lecce, Giovanni

(56) References cited:
- EP-A- 0 683 031
- DE-A- 19 615 309
- DE-A- 19 627 742
- FR-A- 2 493 216
- FR-A- 2 537 915
- FR-A- 2 680 720
- FR-A- 2 785 915
- PATENT ABSTRACTS OF JAPAN vol. 010, no. 033 (M-452), 8 February 1986 (1986-02-08) & JP 60 189431 A (TOYOTA JIDOSHA KK), 26 September 1985 (1985-09-26)
- PATENT ABSTRACTS OF JAPAN vol. 1995, no. 04, 31 May 1995 (1995-05-31) & JP 07 016944 A (JAPAN STEEL WORKS LTD:THE), 20 January 1995 (1995-01-20)
- PATENT ABSTRACTS OF JAPAN vol. 012, no. 487 (M-778), 20 December 1988 (1988-12-20) & JP 63 209927 A (TAKARA CO LTD), 31 August 1988 (1988-08-31)
- PATENT ABSTRACTS OF JAPAN vol. 008, no. 154 (M-310), 18 July 1984 (1984-07-18) & JP 59 049948 A (KOUJI MUROOKA;OTHERS: 01), 22 March 1984 (1984-03-22)

## Description

The present invention relates to a process for the automatic and centered assembly of molded parts to be coupled.

More particularly, the present invention relates to a process for the automatic and centered assembly of molded parts to be coupled, said parts being made from thermoplastic material especially suitable to realize acoustic boxes for lateral spaces of motor-vehicles or like articles for other applications.

As is known, the molded parts, or half-shells, are realized with pins and the related reference seats, and/or complementary male-female sections located along the peripheral union zone, which are automatically coupled and aligned by handling robots or operators.

Processes for the automatic and centred assembly of molded parts or half-shells, made from plastic material, formed by a hot molding process and provided with integral means of alignment and engagement, to manufacture tight boxes, are well known in the art.

Particularly, DE-A-196 15 309, EP-A-0 683 031, JP-A-60-189 431, FR-A-2 680 720, JP-A-07-016 944 and FR-A-2 785 915 disclose processes for the manufacture of a hollow product without open access spaces by assembling injection moulded parts according to the features of the preamble of the new claim 1.

FR-A-2 493 216 relates to an acoustic resonator comprising at least two parts glued to each other and an element (tailed conduct) integral to one of -the parts and extending through an aperture delimited at least partially from the other parts, wherein a seal joint from elastomeric material is clamped on said element and arranged between said element and the walls of said aperture. The disposed process for manufacturing this acoustic resonator comprises the phases of (a) assembling the joint on the element, (b) fixing said element on a first one of the two parts, (c) arranging the joint astride of the wall adjacent the first part, (d) arranging the second part on the first part by inserting the wall of said second part into the joint, and (e) carrying out the welding of the two parts by vibration.

Only by way of example and in order to facilitate the understanding of the process of the present invention, there have been taken as a reference the acoustic boxes constituted of coupled half-shells from plastic material obtained by injection molding. They are usually located in the lateral spaces of the motor-vehicles and comprise, on the one hand, the loudspeakers, the amplifiers and the related connections, while the other part constitutes the air space necessary for the transmission of sound. Said shells are provided with complementary male-female peripheral sections that are coupled and caused to fit in with each other. In order to facilitate the assembly, reduce the assembly time and exclude the possibility of the occurrence of vibrations of loudspeakers and/or air breathing, it is necessary that, during the working of the acoustic boxes, said half-shells are coupled and tied to each other perfectly. To obtain this, they are at present strictly kept in the exact centering position, to prevent the cooling effect on their different geometry from causing deformations so different as not allow their correct coupling. Such process is, therefore, laborious, limiting and substantially little economical.

Object of the present invention is to eliminate the above mentioned drawbacks.

More particularly, object of the present invention is to provide a process for the assembly of molded parts by means of coupling and tying with each other in a perfect, automatic and precise manner, realized in one single step.

A further object of the present invention is to provide a process of assembling of molded parts by means of coupling and tying with each other that is economical and of easy realization.

According to the present invention, these and still other objects are achieved by a process for the automatic, centred and tight assembling in a single step of molded parts or half-shells made from plastic material to produce tight acoustic boxes for motor-vehicles provided with open access spaces for the passage of connections or circuits, said process comprising:
a) forming by a hot molding process of said molded parts or half-shells provided with embedded integral means of alignment and engagement and with complementary and aligned ribs, and
b) alignment and coupling with each other of said molded parts or half-shells by making use of said embedded integral means of alignment and engagement for producing a coupled body having aligned ribs, said alignment and coupling being carried out directly after the hot molding process and before the cooling down of said molded parts or half-shells;
wherein the open access spaces are realised between the complementary and aligned ribs and sealing gaskets are associated to said ribs in said open access spaces.

The process of the present invention allows to obtain a compensation of the different shrinkage due to the different geometry of the alignment and embedding engagement means.

According to the process of the present invention, the molded parts or half-shells to be coupled are taken as soon as they are formed and while they are still hot by handling robots or operators, assembled and coupled before their cooling. The locating pins and/or the complementary male-female sectors, located along the peripheral union zones of said half-shells, keep the components in the right position and facilitate .the operating step during the coupling and the cooling.

The advantages achieved by means of the process of the present invention lie essentially in that the alignment, centering and perfect tightness of the coupled half-shells take place automatically and quickly in one single step, in the precise and desired manner, and to advantageous economical conditions. In order to better understand the process of the present invention, the same will be described in detail hereafter, making reference to the attached drawings and wherein:

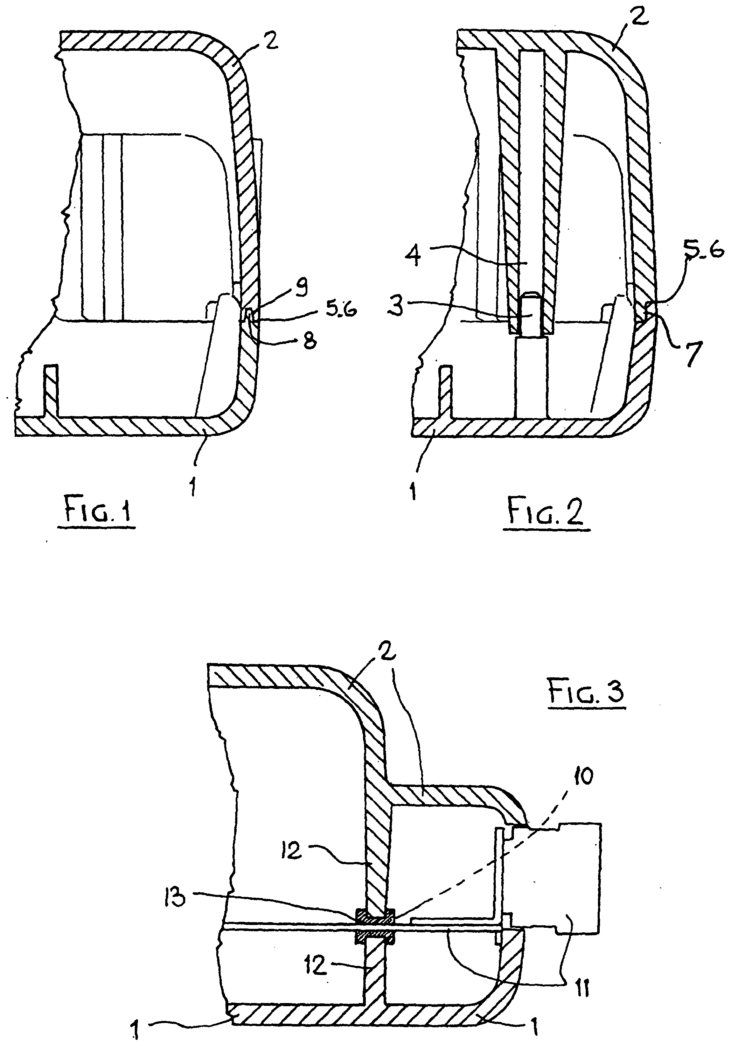

Figure 1 shows a partial schematic view of a cross-section of a coupling along the peripheral edges of two molded parts or half-shells having a different geometry, realized with complementary sections that fit in with each other, according to the process of the present invention.
Figure 2 shows a partial schematic view of a cross-section of a coupling along the peripheral edges of molded parts or half-shells having a different geometry, realized with complementary sections that fit in with each other both by means of centering pins and by insertion in reference seats, according to the process of the present invention.
Fig. 3 shows a partial schematic view of a cross-section of a coupling of molded parts or half-shells having a different geometry, as shown in Figures 1 and 2, associated to intermediate couplings with gaskets on ribs, particularly for the zones partially open for connections and the like, obtained by the process of the present invention.

With reference to the figures, one should consider cases 1 and lids 2 from thermoplastic material having a different geometry, that must be coupled to each other after their forming obtained by injection molding or the like, so as to be perfectly aligned, centered and tight. In order to satisfy these technical-functional requirements, cases 1 and lids 2 are realized with coupling and/or centering elements that must be associated in mutual embedding. Said coupling and centering elements may be constituted by pins 3 which develop from the inside of one of said bodies to be coupled 1, and by seats 4, coaxial with said pins and obtained on the other body to be coupled 2. Said pins 3 are located in different, prefixed strategic points and extend and protrude beyond the ideal coupling plane for a length sufficient to fittingly engage with the corresponding coaxial reference seats 4. Also said coaxial seats 4 develop from the inside of the other complementary body 2 beyond said ideal coupling plane, until they house pins 3. Said coupling and centering associated elements, namely pins 3, reference seats 4, connect with the complementary peripheral edges 5 and 6 of cases 1 and lids 2, provided with a simple ledge 7. Alternatively and preferably, the peripheral edges 5 and 6 of cases 1 and lids 2 are provided with sections 8 and 9, that can fittingly and tightly interpenetrate within each other.

In case of presence of possible open access spaces 10 for the passage of possible connections or circuits 11 or the like, said spaces 10 are realized between complementary and aligned ribs 12, obtained on the coupled bodies 1 and 2. Sealing gaskets 13 may be associated to said complementary and aligned ribs 12. Said gaskets 13 may be of the added type or they may be obtained by molding with bimaterials during the same molding step of bodies 1 and/or 2.

Taking into account the above described construction geometry, cases 1 and lids 2, provided with the complementary means: pins 3, reference sit 4, ledge 7 or associated sections 8 and 9, access spaces, sealing gaskets 13, are fittingly and tightly coupled directly after being hot molded and before the cooling of the plastic material they are made from, with a different shrinkage ensuing from their different geometry. Such different shrinkage would, in fact, prevent the correct aligned arrangement of the parts.

According to the process, the components to be coupled as well as cases 1 and lids 2, after their forming by injection molding or the like, are automatically collected by handling robots or operators, and are aligned and fittingly coupled, on prior automatic insertion of the internal components.

## Claims

1. A process for the automatic, centred and tight assembling in a single step of molded parts or half-shells (1, 2) made from plastic material to produce tight acoustic boxes for motor-vehicles provided with open access spaces (10) for the passage of connections or circuits (11), said process comprising:
a) forming by a hot molding process of said molded parts or half-shells (1, 2) provided with embedded integral means of alignment and engagement (3, 4, 8, 9) and with complementary and aligned ribs (12), and
b) alignment and coupling with each other of said molded parts or half-shells (1, 2) by making use of said embedded integral means of alignment and engagement (3, 4, 8, 9) for producing a coupled body having aligned ribs (12), said alignment and coupling being carried out directly after the hot molding process and before the cooling down of said molded parts or half-shells (1, 2);
**characterised in that** the open access spaces (10) are realised between the complementary and aligned ribs (12) and **in that** sealing gaskets (13) are associated to said ribs (12) in said open access spaces (10).

2. The process according to claim 1, **characterised in that** the sealing gaskets (13) are associated to the ribs (12) in said open access spaces (10) after the hot molding process and before the cooling down of said molded parts or half-shells (1, 2).

3. The process according to claim 1, **characterised in that** the sealing gaskets (13) are obtained during the same molding process for producing the molded parts or half-shells (1, 2) by using bimaterials.

4. The process according to anyone of the preceding claims, **characterised in that** said molded parts or half-shells (1, 2) have an inside and a coupling plane, and said embedded integral means of alignment and engagement comprise pins (3), which project from the inside of one (1) of said molded parts or half-shells (1, 2), and seats (4), coaxial to said pins (3), which project from the inside of the other (2) of said molded parts or half-shells (1, 2); each pin (3) and each coaxial seat (4) protruding beyond the coupling plane of each molded parts or half-shells (1, 2) and fittingly engaging with each other.

5. The process according to anyone of the preceding claims, **characterised in that** said molded parts or half-shells (1, 2) have complementary peripheral edges (5, 6), and **in that** said edges (5, 6) are provided with sections (8, 9) which fittingly and tightly interpenetrate within each other.

## Patentansprüche

1. Verfahren für den automatischen, zentrierten und dichten Zusammenbau in einem einzigen Schritt von gegossenen Teilen oder Gehäusehälften (1,2), die aus Kunststoffmaterial hergestellt sind, um dichte Akustikboxen für Motorfahrzeuge herzustellen, wobei die Akustikboxen mit offenen Zugriffräumen (10) für die Durchführung von Verbindungen oder Schaltkreisen (11) versehen sind, wobei das Verfahren umfasst
a) Bilden der gegossenen Teile oder Gehäusehälften (1,2), die mit eingebetteten, integralen Einrichtungen zur Ausrichtung und zum Eingriff (3,4,8,9) und mit komplementären und ausgerichteten Rippen (12) versehen sind, durch ein Heißgießverfahren und
b) Ausrichten und Koppeln der gegossenen Teile oder Gehäusehälften (1,2) miteinander unter Verwendung der eingebetteten, integralen Einrichtungen zur Ausrichtung und zum Eingriff (3,4,8,9) zur Herstellung eines gekoppelten Körpers mit ausgerichteten Rippen (12), wobei das Ausrichten und Koppeln direkt nach dem Heißgießverfahreren und vor dem Abkühlen der gegossenen Teile oder Gehäusehälften (1,2) ausgeführt wird;
**dadurch gekennzeichnet, dass** die offenen Zugiffsräume (10) zwischen den komplementären und ausgerichteten Rippen (12) gebildet werden, und dass abdichtende Dichtungen (13) den Rippen (12) in den offenen Zugriffsräumen (10) hinzugefügt werden.

2. Verfahren gemäß Anspruch 1,
**dadurch gekennzeichnet, dass** die abdichtenden Dichtungen (13) den Rippen (12) in den offenen Zugriffsräumen (10) nach dem Heißgießverfahren und vor dem Abkühlen der gegossenen Teile oder Gehäusehälften (1,2) hinzugefügt werden.

3. Verfahren gemäß Anspruch 1,
**dadurch gekennzeichnet, dass** die abdichtenden Dichtungen (13) während desselben Gießverfahrens zur Herstellung der gegossenen Teile oder Gehäusehälften (1,2) unter Verwendung von Bimaterialien vorgesehen werden.

4. Verfahren gemäß einem der vorhergehenden Ansprüche,
**dadurch gekennzeichnet,**
**dass** die gegossenen Teile oder Gehäusehälften (1,2) eine Innenseite und eine Koppelebene aufweisen, und die eingebetteten, integralen Einrichtungen zur Ausrichtung und zum Eingriff Stifte (3), welche aus der Innenseite eines (1) der gegossenen Teile oder Gehäusehälften (1,2) herausragen, und zu den Stiften (3) koaxiale Sitze (4) umfassen, welche aus der Innenseite der anderen (2) der gegossenen Teile oder Gehäusehälften (1,2) herausragen; wobei jeder Stift (3) und jeder koaxiale Sitz (4) über die Koppelebene jedes der gegossenen Teile oder Gehäusehälften (1,2) vorstehen und passend ineinander greifen.

5. Verfahren gemäß einem der vorhergehenden Ansprüche,
**dadurch gekennzeichnet, dass** die gegossenen Teile oder Gehäusehälften (1,2) komplementäre, umfängliche Kanten (5,6) aufweisen, und dass die Kanten (5,6) mit Abschnitten (8,9) versehen sind, welche sich passend und eng gegenseitig durchdringen.

## Revendications

1. Procédé pour l'assemblage automatique, centré et étanche en une seule phase de pièces ou demi-coques moulées (1, 2) faites de matière plastique pour produire des boîtiers acoustiques étanches pour des véhicules à moteur pourvus d'espaces à accès ouvert (10) pour le passage de connexions ou circuits (11), ledit procédé comprenant les opérations consistant à :
a) former par un moulage à chaud lesdites pièces ou demi-coques moulées (1, 2) pourvues de moyens intégrés d'un seul tenant d'alignement et d'engagement (3, 4, 8, 9) et de nervures complémentaires et alignées (12), et
b) aligner et accoupler les unes aux autres lesdites pièces ou demi-coques moulées (1, 2) en utilisant lesdits moyens intégrés d'un seul tenant d'alignement et d'engagement (3, 4, 8, 9) pour produire un corps accouplé comportant des nervures alignées (12), ledit alignement et ledit accouplement étant effectués directement après le moulage à chaud et avant le refroidissement desdites pièces ou demi-coques moulées (1, 2) ;
**caractérisé en ce que** les espaces à accès ouvert (10) sont formés entre les nervures complémentaires et alignées (12) et **en ce que** des joints d'étanchéité (13) sont associés auxdites nervures (12) dans lesdits espaces à accès ouvert (10).

2. Procédé selon la revendication 1, **caractérisé en ce que** les joints d'étanchéité (13) sont associés aux nervures (12) dans lesdits espaces à accès ouvert (10) après le moulage à chaud et avant le refroidissement desdites pièces ou demi-coques moulées (1, 2).

3. Procédé selon la revendication 1, **caractérisé en ce que** les joints d'étanchéité (13) sont obtenus durant la même opération de moulage que celle pour produire les pièces ou demi-coques moulées (1, 2) en utilisant des bimatériaux.

4. Procédé selon l'une quelconque des revendications précédentes, **caractérisé en ce que** lesdites pièces ou demi-coques moulées (1,2) ont un plan intérieur et d'accouplement, et lesdits moyens intégrés d'un seul tenant d'alignement et d'engagement comprennent des tiges (3), qui font saillie depuis l'intérieur d'une (1) desdites pièces ou demi-coques moulées (1, 2), et des sièges (4), coaxiaux auxdites tiges (3), qui se projettent depuis l'intérieur de l'autre (2) desdites pièces ou demi-coques moulées (1, 2), chaque tige (3) et chaque siège coaxial (4) faisant saillie au-delà du plan d'accouplement de chacune des pièces ou demi-coques moulées (1, 2) et s'engageant mutuellement en s'ajustant bien.

5. Procédé selon l'une quelconque des revendications précédentes, **caractérisé en ce que** lesdites pièces ou demi-coques moulées (1, 2) comportent des bords périphériques complémentaires (5, 6), et **en ce que** lesdits bords (5, 6) sont pourvus de sections (8, 9) qui s'interpénètrent de manière ajustée et étanche.
